# EUROPÄISCHE PATENTANMELDUNG

(11) **EP 3 594 095 A1**
(43) Veröffentlichungstag der Anmeldung: **15.01.2020**
(21) Anmeldenummer: 19184356.4
(22) Anmeldetag: 04.07.2019
(51) Int. Cl.: B62H 3/02, B62H 3/12, E04H 6/00

(54) **FAHRRADGARAGE MIT EINER HEBEHILFE**

(30) Priorität: 10.07.2018 DE 102018116620
(71) Anmelder: Rotark GmbH, 09599 Freiberg (DE)
(72) Erfinder: Triphaus, Josef, 49808 Lingen (DE)
(74) Vertreter: Sperling, Thomas

(57) **Zusammenfassung**

Die Erfindung betrifft eine Fahrradgarage (1) zur Aufnahme von Fahrrädern, aufweisend eine Umhausung, eine gegenüber dem Boden erhöht angeordnete Aufnahmevorrichtung (6) zur Aufnahme von Fahrrädern in vertikaler Position sowie eine Hebehilfe zur Unterstützung der vertikalen Positionierung des Fahrrades in der Aufnahmevorrichtung (6), wobei die Hebehilfe eine Umlenkrolle (10) und ein über die Umlenkrolle (10) geführtes Seil (9) aufweist, an dessen erstem Ende ein Hebehaken (8) zur temporären Aufnahme des Fahrrades und an dessen zweitem Ende ein dem Gewicht des Fahrrades entgegenwirkendes Hilfsgewicht (11) angeordnet ist und wobei der Hebehaken (8) mittels der Hebehilfe aus einer unteren Aufnahmestellung für das Fahrrad in eine obere Übergabestellung für das Fahrrad an die Aufnahmevorrichtung (6) bewegbar ausgebildet ist und wobei eine Arretiervorrichtung (12) am Seil (9) angeordnet ist, durch welche das Seil (9) derart fixierbar ist, dass der Hebehaken (8) in der oberen Übergabestellung temporär zur Übergabe des Fahrrades an die Aufnahmevorrichtung (6) arretiert ist.

## Beschreibung

Die Erfindung betrifft eine Fahrradgarage mit einer Hebehilfe zur Positionierung eines Fahrrades in einer Aufnahmevorrichtung einer Fahrradgarage unter Anhebung wenigstens eines Abschnittes des Fahrrades.

Hebehilfen sind Hilfskonstruktionen, welche geeignet sind das Heben schwerer Lasten zu unterstützen. Insbesondere für Lasten, welche für bestimmte einzelne Personen ohne eine derartige Unterstützung nicht bewältigt werden können, unterstützt eine Hebehilfe die Möglichkeit der selbstständigen Handlung im Alltag. Dadurch kann die Abhängigkeit körperlich schwächerer Personen von der Hilfe durch andere Personen reduziert werden.

Insbesondere ältere Personen stoßen alltäglich bei einer Vielzahl von Tätigkeiten an ihre Grenzen. So ist es beispielsweise für viele ältere Personen eine Hilfe und Freude ein Fahrrad zu nutzen, wobei die Handhabung des Fahrrades allerdings aufgrund des hohen Gewichtes oft eine große Herausforderung darstellt. Eine Überwindung von mehreren Stufen zur Unterbringung des Fahrrades im Keller ist dadurch oft nicht möglich. Um dennoch einen Schutz des Fahrrades zu gewährleisten, sind ebenerdige Fahrradgaragen eine geeignete Alternative für die Aufbewahrung des Fahrrades.

Als Fahrradgaragen werden Abstell- und Aufbewahrungsmöglichkeiten für Fahrräder angesehen, welche die eingestellten Fahrräder vor Witterungseinflüssen schützen. Ferner bieten Fahrradgaragen einen potentiell höheren Schutz gegen Vandalismus und Diebstahl, da sie in der Regel abschließbar sind. Insbesondere in Wohngebieten mit einer hohen Anzahl an Mehrfamilienhäusern werden einzelne Fahrradgaragen zum Abstellen der Fahrräder gegenüber dem Unterstellen der Fahrräder im Wohngebäude bevorzugt. Neben einer Anordnung der Fahrradgaragen auf privaten Grundstücken oder in Gärten, werden Fahrradgaragen in einigen Städten auch im öffentlichen Raum positioniert, um Fahrräder insbesondere vor Diebstahl zu schützen.

Es sind dabei unterschiedliche Formen mit verschiedenen Maßen bekannt. Eine Möglichkeit der Ausführung ist, die Fahrradgarage der Höhe und Länge der Fahrräder anzupassen. Solche niedrigen Fahrradgaragen sind beispielsweise geeignet auch auf PKW-Parkplätzen in Innenstädten montiert zu werden.

Eine weitere Möglichkeit stellen Fahrradgaragen dar, in welche die Fahrräder durch den Nutzer sehr bequem eingestellt und auch wieder entnommen werden können. Das kann beispielsweise durch Fahrradgaragen gewährleistet werden, welche von unterschiedlichen Seiten zugänglich sind. Diese sind meist mehreckig ausgebildet und weisen an mehreren Seiten Türen zum Einstellen der Fahrräder auf. Beispielsweise ist aus dem Stand der Technik aus der DE 295 03 797 U1 eine zehneckige Fahrradgarage zur Aufbewahrung von 10 Fahrrädern bekannt.

In dicht bewohnten Gegenden wird häufig Wert auf eine platzsparende Anordnung gelegt. So ist es vorteilhaft, die Fahrräder nicht in herkömmlichen Fahrradständern einzustellen, sondern alternative Aufbewahrungskonzepte zu nutzen. Es existieren im Stand der Technik unterschiedliche Fahrradgaragen, bei denen die Fahrräder nicht mit beiden Reifen auf dem Boden abgestellt werden.

Beispielsweise ist in der DE 195 18793 C2 eine Einrichtung zur Aufbewahrung von Fahrrädern beschrieben, in welcher die Fahrräder um 90° zur Fahrposition gedreht, in einer vertikalen Position aufbewahrt werden. Dabei wird das Fahrrad derart nach oben geklappt, dass das Hinterrad oben, oberhalb des Vorderrades angeordnet ist. Das Fahrrad wird in dieser Position durch spezielle Vorrichtungen gesichert, welche am Sattel angeordnet sind. Dadurch wird ein seitliches Umkippen des Fahrrades verhindert.

Alternativ existieren Methoden zur Aufbewahrung von Fahrrädern, bei denen das Vorderrad nach oben weist, wie es beispielsweise in der EP 0 655 384 B1 beschrieben ist. Darin ist insbesondere eine Vorrichtung zur Halterung der Fahrräder in einer solchen vertikalen Position offenbart. Eine weitere Variante zur vertikalen Lagerung von Fahrrädern, wobei die Fahrräder in einer gegenüber dem Boden deutlich erhöhten Position aufgehangen werden, ist in der DE 20 2017 100 380 U1 beschrieben.

Die vertikale Aufbewahrung von Fahrrädern ist eine Möglichkeit der platzsparenden Lagerung von Fahrrädern unter einem sehr geringen Einsatz an Grundfläche. Allerdings weist eine vertikale Lagerung der Fahrräder auch einen signifikanten Nachteil auf, da das Einstellen der Fahrräder in die Fahrradgarage in der Regel mit einem höheren Aufwand und starkem körperlichen Einsatz verbunden ist. Insbesondere bei schweren Fahrrädern können schwächere Personen damit überfordert sein, so dass eine solche Fahrradgarage für sie nicht nutzbar ist.

Um das Einstellen eines Fahrrades in eine Fahrradgarage, in welcher es vertikal gelagert werden soll, zu erleichtern, ist eine Führung des Fahrrades hilfreich, wie sie in DE 41 05 817 A1 offenbart ist. Dabei wird eine Führungseinrichtung mit der Lenkerstange eines Fahrrades verbunden und das Fahrrad wird dann mittels einer Federkraft in die gewünschte Position gezogen. Die Kraft muss vor dem Einstellen des Fahrrades gegen die Feder aufgebaut werden, so dass nachfolgend die gespeicherte Energie zur Führung des Fahrrades genutzt werden kann.

Eine Vorrichtung zum Heben von Fahrrädern und anderen sperrigen Gegenständen ist in der DE 298 05 042 U1 beschrieben. Dabei sind zwei Hakenelemente mit jeweils zwei parallel angeordneten Haken mit je einem Seil verbunden, das um je eine Umlenkrolle geführt wird. Eine elektrische Antriebsvorrichtung ist mit dem Seil derart verbunden, dass eine Kraft auf das Seil und somit auf das Fahrrad übertragen wird, so dass das Fahrrad nach oben gezogen wird. Diese Vorrichtung ermöglicht die Anhebung des Fahrrades ohne großen körperlichen Einsatz, setzt allerdings auch eine Stromversorgung voraus.

Nachteilig bei den bekannten Konstruktionen zum Führen von Fahrrädern ist, dass diese zumeist kompliziert aufgebaut sind, woraus hohe Kosten für den Aufbau einer solchen Anlage resultieren. Außerdem ist eine eventuell notwendige Stromversorgung häufig nicht ohne Weiteres zu realisieren.

Die Aufgabe der Erfindung besteht folglich darin eine Vorrichtung zur Verfügung zu stellen, welche eine platzsparende und sichere Aufbewahrung von Fahrrädern insbesondere auch für körperlich schwächere Menschen ermöglicht. Ferner soll die Vorrichtung kostengünstig zu fertigen sein.

Die Aufgabe wird durch einen Gegenstand mit den Merkmalen gemäß Patentanspruch 1 gelöst. Weiterbildungen sind in den abhängigen Patentansprüchen angegeben.

Die Aufgabe wird insbesondere durch eine Fahrradgarage zur Aufnahme von Fahrrädern gelöst, welche eine Umhausung, eine gegenüber dem Boden erhöht angeordnete Aufnahmevorrichtung zur Aufnahme von Fahrrädern in vertikaler Position sowie eine Hebehilfe zur Unterstützung der vertikalen Positionierung des Fahrrades in der Aufnahmevorrichtung aufweist. Dabei sind die Aufnahmevorrichtung sowie die Hebehilfe innerhalb der Umhausung angeordnet.

Die Fahrräder sind in den Aufnahmevorrichtungen derart positionierbar, dass eine dauerhafte Lagerung der Fahrräder in der Fahrradgarage erreicht wird. Die Hebehilfe weist eine Umlenkrolle und ein über die Umlenkrolle geführtes Seil auf, an dessen erstem Ende ein Hebehaken zur temporären Aufnahme des Fahrrades und an dessen zweitem Ende ein dem Gewicht des Fahrrades entgegenwirkendes Hilfsgewicht angeordnet ist. Dabei ist der Hebehaken mittels der Hebehilfe aus einer unteren Aufnahmestellung für das Fahrrad in eine obere Übergabestellung für das Fahrrad an die Aufnahmevorrichtung heran bewegbar ausgebildet. Ferner ist eine Arretiervorrichtung am Seil angeordnet, durch welche das Seil derart fixierbar ist, dass der Hebehaken in der oberen Übergabestellung temporär zur Übergabe des Fahrrades an die Aufnahmevorrichtung arretiert ist.

Als Seil wird im Sinne der Erfindung auch ein Seilsystem verstanden, beispielsweise eine Anordnung von zwei Seilen, welche kraftübertragend über eine Lastwelle oder Welle miteinander gekoppelt sind und wobei die zwei Seile an verschiedenen Punkten der Welle derart mit der Welle beziehungsweise mit auf der Welle angeordneten Umlenkrollen verbunden sind, dass bei einer Drehung der Welle eines der Seile auf- und das andere abgewickelt wird. Die Seile wirken einander entgegen. Ein mit dem ersten Seil verbundenes Gewicht wirkt entgegen einem an dem zweiten Seil angebrachten Gewicht.

Eine Welle oder Lastwelle ist im Sinne der Erfindung ein länglicher Körper, mit dem verschiedene Elemente kraftübertragend verbunden oder kraftübertragend gekoppelt sind. Dabei ist die Welle ein Element zur Kraftübertragung zwischen diesen mit ihr gekoppelten Elementen.

Zwei Elemente sind im Sinne der Erfindung kraftübertragend miteinander gekoppelt, wenn durch eine Krafteinwirkung auf das eine Element auch das andere Element von dieser Kraft beeinflusst wird. Beispielsweise ist ein über eine Umlenkrolle geführtes Seil über Reibung kraftübertragend mit der Umlenkrolle gekoppelt.

Die Hebehilfe ist in einer vorteilhaften Ausgestaltung durch die Arretiervorrichtung auch in einer Zwischenstellung, bei der der Hebehaken zwischen der unteren Aufnahmestellung und der oberen Übergabestellung positioniert ist, fixierbar. Die Arretiervorrichtung ist dabei in einer geeigneten Variante als bremsbare Umlenkrolle ausgebildet.

Vorzugsweise ist an einem oberen Abschnitt der Hebehilfe eine Hebelvorrichtung unter Verwendung eines Hebelmechanismus angeordnet. Durch die ausgenutzte Hebelwirkung wird die notwendige Kraft zur Anhebung des Fahrrades weiter reduziert und es wird durch die Verwendung einer derartigen Hebelvorrichtung die Handhabung der Hebehilfe weiter vereinfacht. Die Verwendung eines Hebels eröffnet die Möglichkeit, unter einem weiter reduzierten Kraftaufwand das letzte Stück des Anhebens des Fahrrades sowie das Einsetzen des Fahrradlenkers in den Lagerhaken zu vereinfachen. Dazu ist beispielsweise die Umlenkrolle derart über einen Hebelmechanismus in ihrer Position veränderbar, dass auch der Hebehaken mit dem Fahrradlenker leicht angehoben sowie eventuell auch horizontal bewegt wird. Dadurch wird der Fahrradlenker im Lagerhaken positioniert. Um die Hebelvorrichtung nutzen zu können ist es notwendig, dass der Hebehaken mit dem eingehängten Fahrrad bereits in der Nähe des Lagerhakens angeordnet ist, dass also die Hebehilfe mit dem daran eingehängten Fahrrad zuvor in der oberen Übergabestellung positioniert wird. Vorzugsweise ist der Hebel geeignet, das Fahrrad um weitere 2 bis 5 cm anzuheben, sodass es mit wenig Kraftaufwand in den Lagerhaken beziehungsweise in die Aufnahmevorrichtung in der Fahrradgarage geschoben werden kann.

Bevorzugt sind mehrere Hilfsgewichte modular am Seil befestigbar. Dadurch kann die Gesamtmasse der Hilfsgewichte dem Gewicht des anzuhebenden Fahrrades angepasst werden. Dabei weist die Hebehilfe wenigstens ein zweites Hilfsgewicht auf, welches vorzugsweise entweder mit dem ersten Hilfsgewicht verbindbar ausgebildet ist oder das zweite Hilfsgewicht ist in einer anderen Variante direkt mit dem zweiten Ende des Seiles verbindbar.

Eine besonders vorteilhafte Ausgestaltung der Fahrradgarage sieht ferner Gegenhilfsgewichte vor. Dazu ist an dem ersten Ende des Seiles, an welchem auch der Hebehaken angeordnet ist, außerdem ein Aufnahmeelement für ein oder mehrere Gegenhilfsgewichte vorgesehen. Die Gegenhilfsgewichte werden genutzt, um die an dem zweiten Ende des Seiles befestigten Hilfsgewichte anzuheben. Das Aufnahmeelement kann dabei beispielsweise in Form eines Hakens an dem Hebehaken angeordnet sein. Die Gewichtskraft der Gegenhilfsgewichte reduziert die notwendige Kraft, welche benötigt wird, um die Hilfsgewichte in eine erhöhte Position zu verbringen. Beispielsweise werden bei einem möglichen Gesamthilfsgewicht von 30 kg Gegenhilfsgewichte mit einer Masse von 10 kg am ersten Ende des Seiles angebracht, sodass die aufzubringende Kraft zum Anheben der Hilfsgewichte reduziert wird. Es wird im Wesentlichen lediglich eine Kraft benötigt, welche der Differenz der Gewichtskräfte, also 20 kg, entgegengewirkt. Nach einer alternativen Ausgestaltung der Fahrradgarage sind auf einer Welle oder Lastwelle mehrere Umlenkrollen angeordnet. Das Seil, welches mit dem Hebehaken und dem Hilfsgewicht verbunden ist, wird über eine erste Umlenkrolle oder über eine erste und eine zweite Umlenkrolle geführt und verklemmt. Zwei Hilfsseile werden über zwei weitere Umlenkrollen, die Hilfsgewichtsumlenkrollen, geführt und sind mit der Welle kraftübertragend gekoppelt. Dabei sind das Seil und die Hilfsseile derart angeordnet, dass das Hilfsgewicht dem Gewicht des Fahrrades entgegenwirkt und die Gegenhilfsgewichte wiederum dem Hilfsgewicht entgegen wirken. Vorteilhaft ist insbesondere einer Ausgestaltung der Fahrradgarage, bei der die Gegenhilfgewichte derart geführt werden, dass sie an beiden Seiten der Tür neben der Tür im Inneren der Fahrradgarage angeordnet sind. Dadurch können die Gegenhilfsgewichte zu- oder abgeladen werden ohne die Fahrradgarage betreten zu müssen. Vorzugsweise sind die Gegenhilfsgewichte für das Anheben von leichten Fahrrädern an den Hilfsseilen angeordnet und werden nur für schwerere Fahrräder entfernt. Die Wirkung der Hebehilfe kann also einerseits durch eine Variation des Hilfsgewichtes und alternativ durch eine Variation des Gegenhilfsgewichtes beeinflusst werden. Zur Stabilisierung der Hilfsseile ist es vorteilhaft Stabilisierungsgewichte vorzusehen, welche immer an den Hilfsseilen befestigt sind. Die Masse der Stabilisierungsgewichte ist bevorzugt 2 kg.

Die Aufnahmevorrichtung der Fahrradgarage ist in einer weiteren Ausgestaltung derart über dem Boden erhöht angeordnet, dass ein darin mit dem Fahrradlenker eingehängtes Fahrrad den Boden nicht berührt. Dabei ist die Aufnahmevorrichtung vorzugsweise derart gegenüber dem Boden erhöht angeordnet, dass sie in der Greifhöhe eines Erwachsenen, also in einer Höhe von 1,60 m bis 1,80 m positioniert ist.

Nach einer möglichen Ausführungsform sind in der Fahrradgarage mehrere Aufnahmevorrichtungen als Lagerhaken einer Drehspinne kreisförmig um einen vertikal ausgerichtetes Mastrohr der Drehspinne herum angeordnet. Dabei ist die Drehspinne vorzugsweise um eine durch das Mastrohr verlaufende Drehachse drehbar ausgebildet. In einer Variante ist dabei jeder Lagerhaken über ein Verbindungselement mit dem Mastrohr verbunden. Vorzugsweise ist innerhalb des Mastrohres ein feststehender Maststab angeordnet.

Die Umlenkrolle weist bevorzugt eine horizontale Achse auf. Das Seil wird über die Umlenkrolle, also zu einem Teil um die Umlenkrolle herum, geführt. Das Seil wird durch die Umlenkrolle umgelenkt und ist axial über die Umlenkrolle verschiebbar. Durch eine vorteilhafte Ausführung der Arretiervorrichtung wird der um die Umlenkrolle angeordnete Abschnitt des Seiles mithilfe der Arretiervorrichtung in seiner Position relativ zur Umlenkrolle fixiert. Durch die Fixierung wird eine durch die Gewichtskraft der mit dem Seil verbundenen Hilfsgewichte verursachte Verschiebung des Seiles über die Umlenkrolle verhindert. Ferner kann durch die Aktivierung der Arretiervorrichtung eine Verschiebung des Seiles in der Umlenkrolle auch entgegen dem Gewicht des angehobenen Abschnittes des Fahrrads oder sogar entgegen dem Gewicht des gesamten Fahrrades verhindert werden.

Das Seil kann aus verschiedenen Materialien bestehen. Besonders bevorzugt ist die Ausführung als Stahlseil, wobei insbesondere ein Durchmesser von 4 mm geeignet ist.

In einer vorteilhaften Ausgestaltung weist die Hebehilfe wenigstens eine weitere Umlenkrolle auf. Dabei sind die Umlenkrollen derart in einer Reihe angeordnet, dass das über die Umlenkrollen verlaufende Seil innerhalb einer Ebene verläuft. Vorteilhaft ist eine Ausführung der Hebehilfe mit drei Umlenkrollen.

Der Hebehaken der Hebehilfe weist in einer besonderen Ausführung einen Steg mit zwei an den beiden distalen Enden des Steges befestigten Schlaufen oder Laschen auf, wobei je eine Schlaufe an einem der distalen Enden des Steges angeordnet ist. Die Schlaufen sind in einer vorteilhaften Ausgestaltung entlang des Steges verschiebbar ausgebildet, sodass eine Anpassung an unterschiedliche Breiten von Fahrradlenkern möglich ist. In einer alternativen Variante sind die Schlaufen fest an den distalen Enden des Steges befestigt, was zu einer höheren Stabilität führt. Dabei weisen die Befestigungsstellen der Schlaufen bevorzugt einen Abstand von 40 cm auf. An den distalen Enden des Steges sind weiterhin Halterungen vorgesehen, welche die Verbindung des Steges mit dem Seil herstellen. Die Halterungen sind beispielsweise als starre Stangen mit daran angeordneten Befestigungseinrichtigungen, wie beispielsweise Ösen, zur Befestigung am Seil ausgeführt. Alternativ können die Halterungen als eine gewisse Beweglichkeit aufweisende Seile ausgebildet sein. Die Halterungen verbinden jeweils ein distales Ende des Steges mit dem Seil. Die Schlaufen, welche am Steg befestigt sind, sind bevorzugt beweglich ausgebildet. Dadurch ist es möglich die Schlaufen über die beiden distalen Enden der Lenkerstange zu streifen. Die Gewichtskraft des Fahrrades ist über die Schlaufen und den Steg sowie über die Halterungen auf das Seil übertragbar. Somit kann eine auf das Seil einwirkende Kraft der Gewichtskraft des Fahrrades entgegen wirken. Dadurch wird die für das Anheben des Fahrrades notwendige Kraft vorteilhaft reduziert.

Alternativ weist der Hebehaken zwei nebeneinander angeordnete Haken auf, welche die Lenkerstange umgreifend aufnehmbar ausgebildet sind.

Nach einer weiteren Ausgestaltung ist die Arretiervorrichtung in eine Umlenkrolle integriert, so dass die Umlenkrolle bremsbar ausgebildet ist. Die Umlenkrolle ist bevorzugt derart konstruiert, dass das Seil durch die Umlenkrolle aufwickelbar ist. Ferner wird die Umlenkrolle bevorzugt elektrisch angetrieben oder elektrisch unterstützt.

Die Arretierung des Seils erfolgt in einer vorteilhaften Variante durch Reibelemente. Die zwischen den Reibelementen und dem Seil wirkenden Reibungskräfte verhindern die Veränderung der Position, also das Verschieben des Seiles über die Umlenkrolle. Eine mögliche Realisierung sind Klemmen, welche die Position des Seiles arretieren. Alternativ werden hydraulisch wirkende Arretiervorrichtungen eingesetzt.

Vorzugsweise erfolgt die Arretierung sowie das Lösen der Arretierung mittels eines Betätigungselementes. Das Betätigungselement ist folglich geeignet die Arretiervorrichtung zu schalten und kann dabei über einen Bowdenzug mit der Arretiervorrichtung verbunden sein. Alternativ sind zur Verbindung der Betätigungsvorrichtung mit der Arretiervorrichtung auch weitere mechanische Kraftübertragungselemente geeignet. Eine vorteilhafte Ausgestaltung sieht eine Anordnung der Betätigungsvorrichtung in Greifhöhe zur Betätigung mit der Hand oder alternativ auf dem Boden zur Schaltung mit dem Fuß vor.

Zur Einstellung des Gewichtes der Hebehilfe korrespondierend zum jeweiligen Gewicht des anzuhebenden Fahrrades, kann das Gesamthilfsgewicht angepasst werden. Das Gesamthilfsgewicht ist die Summe des Gewichtes des ersten Hilfsgewichtes sowie des zweiten Hilfsgewichtes und der möglichen weiteren Hilfsgewichte. Das erste Hilfsgewicht ist mit dem Seil verbunden und dient unter anderem der Positionierung des Seiles. Das zweite Hilfsgewicht oder die weiteren Hilfsgewichte können bevorzugt derart modular am Seil der Hebehilfe angeordnet und mit diesem verbunden werden, dass das Gesamthilfsgewicht an die jeweilige Anwendung anpassbar ist.

Vorteilhaft ist eine derartige Ausbildung der Hilfsgewichte, bei der die Masse des ersten Hilfsgewichtes 3 kg nicht überschreitet und die Masse des zweiten Hilfsgewichtes größer ist als die Masse des ersten Hilfsgewichtes. Das erste Hilfsgewicht dient dabei im Wesentlichen der Stabilisierung des Seiles. Bevorzugt liegt die Masse des zweiten Hilfsgewichtes oder der zweiten Hilfsgewichte in einem Bereich zwischen 3 kg und 10 kg, besonders bevorzugt zwischen 4 kg und 6 kg. Nach einer vorteilhaften Ausgestaltung sind neben einem ersten Hilfsgewicht drei weitere Hilfsgewichte modular, also einzeln, zuladbar oder zuschaltbar, wobei das erste Hilfsgewicht in einer speziellen Ausgestaltung eine Masse von 2 kg und die weiteren Hilfsgewichte eine Masse von je 5 kg aufweisen.

Die Umhausung der Fahrradgarage weist vorzugsweise wenigstens eine Garagenwand und ein oberhalb der Garagenwand angeordnetes Garagendach auf. Bevorzugt weist die Fahrradgarage mehrere Garagenwände auf. Diese Garagenwände schließen besonders bevorzugt eine mehreckige Grundfläche ein. Dabei sind insbesondere 8-eckige oder 10-eckige Grundflächen besonders geeignet. In einer alternativen Ausführung weist die Garage eine Garagenwand auf, welche eine im Wesentlichen runde oder ovale Grundfläche einschließt.

Die Grundfläche der Fahrradgarage ist in einer möglichen Ausgestaltung kleiner als 10 m², wodurch vorteilhaft wenig Platz zum Aufstellen der Fahrradgarage benötigt wird. Insbesondere in Großstädten mit hohen Grundstückspreisen, ist das ein bedeutender Vorteil gegenüber größeren Alternativen.

Eine besonders vorteilhafte Ausgestaltung der Fahrradgarage sieht wenigstens zehn, bevorzugt vierzehn, Aufnahmevorrichtungen in Form von Lagerhaken zur Aufnahme von je einem Fahrrad innerhalb der Fahrradgarage vor. Konzeptionsgemäß können in der Fahrradgarage mehrere Fahrräder in einer vertikalen Position in Lagerhaken einer Drehspinne gelagert werden. Dabei ist der Fahrradlenker eines Fahrrades jeweils in einen Lagerhaken eingehängt. Um den Fahrradlenker eines Fahrrades in einen solchen Lagerhaken einzuhängen, ist ein erheblicher Energieaufwand notwendig. Die dafür notwendige Kraft kann durch die Verwendung einer Hebehilfe reduziert werden. Dabei wird nach der Konzeption der Erfindung ein an einem über eine ortsfeste Umlenkrolle verlaufenden Seil befestigtes Hilfsgewicht zunächst in eine erhöhte Position verbracht, wofür die Gewichtskraft des Hilfsgewichtes überwunden werden muss und dem Hilfsgewicht somit potentielle Energie zugeführt wird. Daran anschließend kann diese potentielle Energie genutzt werden. Ein an dem anderen Ende des Seiles angeordneter Hebehaken wird dafür mit dem Fahrradlenker verbunden. Ein Zug am Hilfsgewicht nach unten bewirkt dann eine am Seil und am Hebehaken wirkende Kraft nach oben, wodurch der Hebehaken und der damit verbundene Fahrradlenker erhöht werden. Die dafür notwendige Kraft entspricht dann der Gewichtskraft des Abschnittes des Fahrrades, welcher angehoben wird, vermindert um die Gewichtskraft des Hilfsgewichtes. Für die praktische Umsetzung ist insbesondere auch eine Arretiervorrichtung wichtig, da dadurch die Lage des Seiles und somit die Höhe des Lenkers in einer beliebigen Position festgestellt werden kann. Dadurch ist eine Unterbrechung des Hebevorgangs möglich.

Bei dem Hebevorgang des Fahrrades, bei dem das Fahrrad von einer horizontalen in eine vertikale Position befördert und eventuell auch angehoben wird, ist eine Erhöhung der potentiellen Energie des Fahrrades notwendig. Die dafür aufzubringende Kraft ist um die Gewichtskraft der Hilfsgewichte reduziert.

Das Hilfsgewicht kann beliebig vergrößert werden, um die Hebehilfe auch für schwerere Gegenstände, wie beispielsweise Elektrofahrräder, nutzen zu können. In einer vorteilhaften Variante ist das Hilfsgewicht dabei modular aufgebaut, so dass je nach Verwendungszweck die Masse des Hilfsgewichtes variiert werden kann. Die Module haben bevorzugt eine Masse von 3 kg bis 6 kg. Allerdings muss dabei immer ein Restmodul, welches dem ersten Hilfsgewicht entspricht, mit einer Masse von 1 kg bis 3 kg mit dem Seil verbunden verbleiben, um die Vorspannung des Seiles zu gewährleisten. Das Seil steht somit immer unter Belastung, was vorteilhaft zur Stabilisierung der Fahrradgarage beiträgt. Die Fahrradgarage ist aufgrund des zusätzlichen Gewichtes in sich stabiler, woraus eine reduzierte Windanfälligkeit resultiert.

Vorzugsweise ist zur Anhebung eines Fahrrades mit einer Masse von 25 kg lediglich eine Kraft aufzuwenden, welche dem Anheben einer Masse von 10 kg entspricht. Es können einzelne Module von 5 kg nacheinander angehoben und mit der Hebehilfe verbunden werden. Wenn insgesamt Hilfsgewichte mit einer Gesamtmasse von 15 kg mit der Hebehilfe verbunden sind, so ist beim Anheben des Fahrrades nur noch die Differenz von 10 kg anzuheben. Dabei ist die Hebehilfe in einer geeigneten Ausgestaltung zu jeder Zeit gebremst.

Um das Fahrrad von den Hebehaken der Hebehilfe in die Lagerhaken der Drehspinne zu befördern, wird der Hebehaken mit eingehängtem Fahrradlenker zunächst nach oben bis zu einer Position verbracht, welche höher angeordnet ist als die Position des Lagerhakens. Daraufhin erfolgt ein Absenken des Fahrrades und ein Einfädeln des Fahrradlenkers in den darunter angeordneten Lagerhaken, welcher dann die mechanische Last aufnimmt, so dass der Hebehaken vom Fahrradlenker gelöst werden kann. Alternativ ist ein Umsetzen des Fahrradlenkers mittels eines Hebelmechanismus möglich.

Des Weiteren muss bei einer Auslegung der Hilfsgewichte berücksichtigt werden, dass der Hebehaken ein gewisses Eigengewicht aufweist. Es muss also beim Anheben des Fahrrades nicht nur der Gewichtskraft des Fahrrades sondern zusätzlich auch der Gewichtskraft des Hebehakens entgegengewirkt werden. Die Hilfsgewichte sind insofern größer zu dimensionieren.

Weitere Einzelheiten, Merkmale und Vorteile von Ausgestaltungen der Erfindung ergeben sich aus der nachfolgenden Beschreibung von Ausführungsbeispielen mit Bezugnahme auf die zugehörigen Zeichnungen. Es zeigen:
- Fig. 1:: eine Fahrradgarage mit einer Drehspinne zur Lagerung eines Fahrrades und einer Hebehilfe,
- Fig. 2:: ein Hebehaken mit zwei Schlaufen zur Verbindung mit dem Fahrradlenker,
- Fig. 3:: eine Fahrradgarage mit mehreren Lagerhaken an einer Drehspinne,
- Fig. 4:: ein in einem Hebehaken positionierter Fahrradlenker,
- Fig. 5:: eine perspektivischen Ansicht einer Lastwelle mit mehreren Umlenkrollen und
- Fig. 6:: eine Explosionszeichnung einer Lastwelle mit mehreren Umlenkrollen.

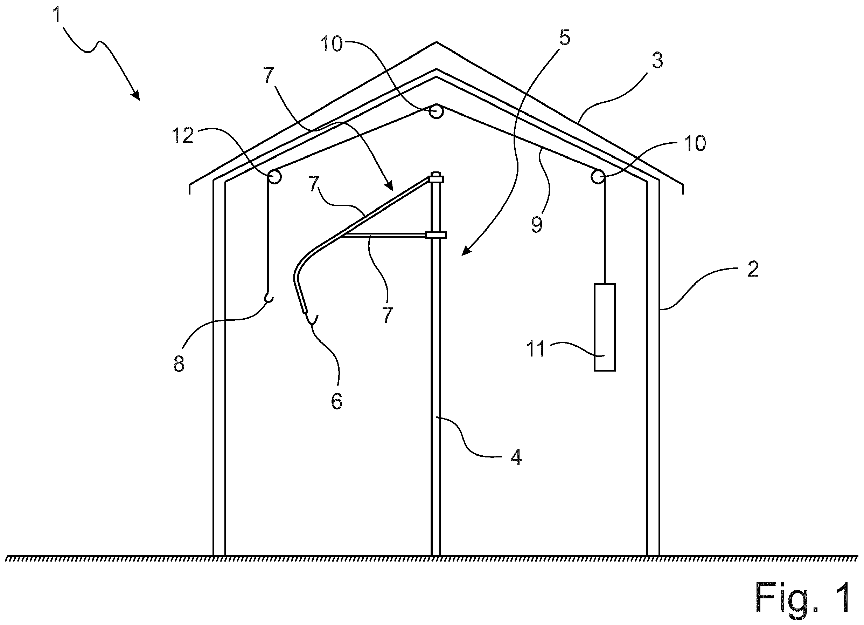

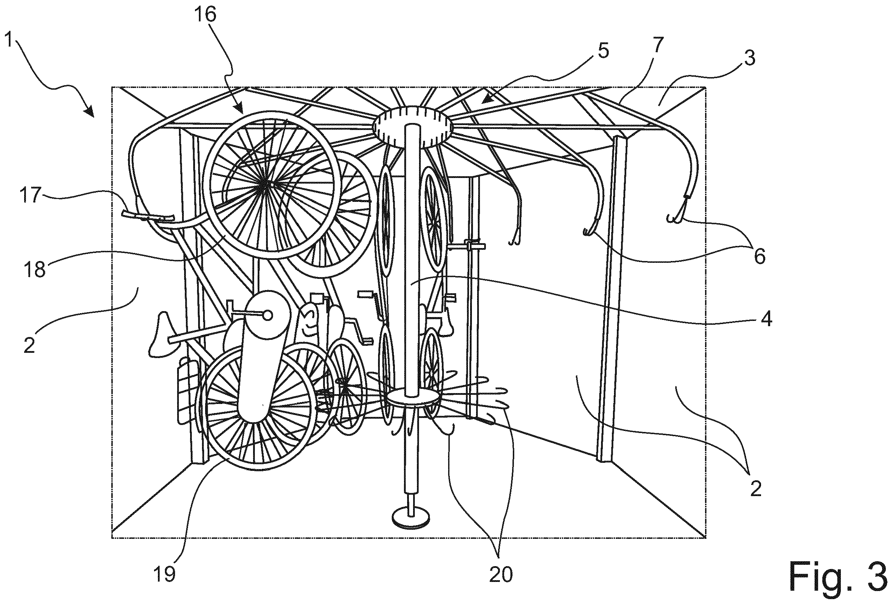

In Fig. 1 ist eine Fahrradgarage 1 aus vertikal ausgerichteten Garagenwänden 2 und einem oberhalb der Garagenwände 2 angeordneten Dach 3 dargestellt. In der Fahrradgarage 1 können mehrere Fahrräder in einer vertikalen Position gelagert werden. Dabei werden die Fahrräder innerhalb der Fahrradgarage 1 kreisförmig um ein Mastrohr 4 einer Drehspinne 5 positioniert. Das drehbare Mastrohr 4 ist um einen feststehenden Maststab 4a angeordnet. An der Drehspinne 5 ist in diesem Ausführungsbeispiel ein Lagerhaken 6 angeordnet, in welchem ein Fahrradlenker einhängbar ist. Die Position des Fahrrades wird durch die Verbindung des Fahrradlenkers mit dem Lagerhaken 6 fixiert. Dabei ist der Lagerhaken 6 über einen oder mehrere Verbindungselemente 7 mit dem Mastrohr 4 der Drehspinne 5 verbunden. In einer vorteilhaften, in Fig. 3 dargestellten Ausbildung der Drehspinne 5 weist die Drehspinne 5 eine Vielzahl von Lagerhaken 6 auf, welche kreisförmig um das Mastrohr 4 der Drehspinne 5, beabstandet vom Mastrohr 4 angeordnet sind. Vorzugsweise ist das Mastrohr 4 oben im Dach 3, besonders bevorzugt in der Dachspitze, befestigt. Die Drehspinne 5 ist sowohl unten im Boden als auch oben am Dach gelagert, wodurch die Drehspinne 5 und auch die Fahrradgarage 1 deutlich stabilisiert wird.

Der Lagerhaken 6 der Drehspinne 5 ist in einer derartigen Höhe angeordnet, dass ein darin eingehängtes Fahrrad mit den Boden nicht berührt. Vorzugsweise ist der Lagerhaken in einem ausreichenden Abstand zum Boden angeordnet, so dass das Fahrrad den Boden der Fahrradgarage 1 gar nicht berührt. Dadurch kann eine Drehbarkeit der Drehspinne 5 gewährleistet werden und die Lagerhaken 6 können entsprechend den Ansprüchen des Nutzers an die gewünschte Stelle gedreht werden. Beispielsweise kann der Nutzer beim Einstellen eines Fahrrades einen leeren Lagerhaken in eine für ihn geeignete Position drehen.

Wenn das Fahrrad im Lagerhaken eingehängt ist, so ist der Vorderreifen des Fahrrades dabei derart erhöht angeordnet, dass er oberhalb des Hinterreifens positioniert ist. Zur Erleichterung des Prozesses der vertikalen Positionierung des Fahrrades, also um das Fahrrad von einer Position, bei der beide Fahrradreifen auf dem Boden aufstehen, in eine Position zu verbringen, bei der der Fahrradlenker in einen der Lagerhaken 6 eingehängt ist, kann eine Hebehilfe genutzt werden. Die Hebehilfe ist geeignet, die für die vertikale Positionierung notwendige Kraft zu reduzieren. Die Hebehilfe ist innerhalb der Fahrradgarage 1 angeordnet und weist einen Hebehaken 8 auf, der an einem Ende eines Seiles 9 angeordnet und mit dem Seil 9 verbunden ist. Der Hebehaken 8 ist mit dem Fahrradlenker eines Fahrrades verbindbar ausgebildet. In einer Variante weist der Hebehaken 8 zwei nebeneinander angeordnete Haken aus Metall oder Kunststoff auf, so dass ein Fahrradlenker eines auf dem Boden stehenden Fahrrades in den Hebehaken 8 der Hebehilfe einhängbar ist. In einer alternativen Variante weist der Hebehaken 8 einen Steg mit an den äußeren Enden des Steges befestigten Schlaufen auf. Diese Schlaufen können über die beiden distalen Enden des Fahrradlenkers gestreift werden. Alternativ können die beiden Schlaufen auch direkt am Seil 9 montiert sein.

Das Seil 9 wird über eine unterhalb des Daches 3 angeordnete Umlenkrolle 10 geführt. An dem zweiten Ende des Seiles 9, welches dem Ende mit dem Hebehaken 8 abgewandt ist, sind ein oder mehrere Hilfsgewichte 11 befestigt. Die Gewichtskraft der Hilfsgewichte 11 muss überwunden, respektive der Gewichtskraft muss entgegengewirkt werden, wenn der Hebehaken 8 vertikal nach unten bewegt wird. Wenn der Hebehaken 8 nach oben bewegt wird, so unterstützt die Gewichtskraft der Hilfsgewichte 11 allerdings diese Bewegung. Die notwendige Kraft zur Anhebung des Hebehakens 8 wird also im Wesentlichen um die Gewichtskraft der mit dem Seil 9 verbundenen Hilfsgewichte 11 reduziert. Wenn ein Fahrrad in den Hebehaken 8 der Hebehilfe eingehängt ist, so kann die Gewichtskraft der Hilfsgewichte 11 die Anhebung des Fahrrades unterstützen.

Zur Fixierung der Hebehilfe in einer bestimmten Position, um beispielsweise ein Nachgreifen oder Pausieren der die Hebehilfe bedienenden Person zu ermöglichen, ist eine bremsbare Rolle 12 an dem Seil 9 angeordnet. Mittels der bremsbaren Rolle 12 kann eine Bewegung und somit ein Verstellen der Position des Seiles 9 verhindert werden, wodurch auch die Position des daran befestigten Hebehakens 8 in der Höhe fixiert ist.

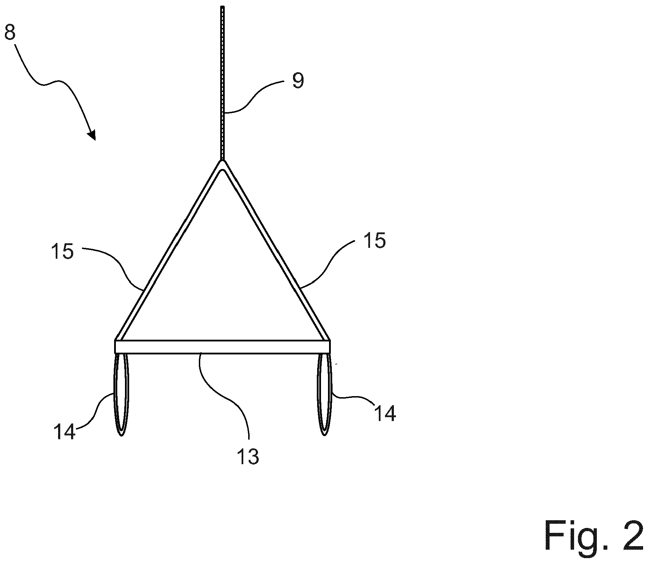

Ein Hebehaken 8 zur Befestigung an der Hebehilfe ist in **Fig. 2** dargestellt. Der Hebehaken 8 weist einen länglichen Steg 13 sowie zwei an dem Steg 13 angeordnete und mit dem Steg 13 verbundene Schlaufen 14 auf. Dabei ist je eine Schlaufe 14 an einem distalen Ende des Steges 13 befestigt. Die Schlaufen 14 sind flexibel ausgebildet, so dass die Schlaufen 14 in alle Richtungen beweglich sind. Dadurch sind die Schlaufen 14 über die Enden eines Fahrradlenkers überstreifbar ausgebildet. An dem Steg 13 sind ferner Halterungen 15 zur Verbindung des Stegs 13 des Hebehakens 8 mit dem Seil 9 der Hebehilfe angeordnet. Ein Verschieben des Seiles 9 führt folglich direkt zu einer Positionsänderung des Hebehakens 8, so dass die Höhe des Hebehakens 8 durch ein Bewegen des Seiles 9 einstellbar ist.

Eine Fahrradgarage 1 mit mehreren darin vertikal positionierten Fahrrädern 16 ist in **Fig. 3** dargestellt. In diesem Ausführungsbeispiel ist unterhalb des Daches 3 eine Drehspinne 5 mit einem um einen feststehenden Maststab 4a angeordnetes Mastrohr 4 und um das Mastrohr 4 herum an den Garagenwänden 2 angeordneten Lagerhaken 6 positioniert. Die Lagerhaken 6 sind über längliche, sternförmig um das Mastrohr 4 angeordnete Verbindungselemente 7 mit dem Mastrohr 4 verbunden.

Die Drehspinne 5 weist vierzehn Lagerhaken 6 auf. Es sind somit in der Fahrradgarage 1 vierzehn Fahrräder 16 in einer vertikalen Position lagerbar. Dabei sind die Fahrräder 16 mit dem Fahrradlenker 17 in einen Lagerhaken 6 der Drehspinne 5 eingehängt. In der vertikalen Position des Fahrrades 16 ist der Vorderreifen 18 oberhalb des Hinterreifens 19 angeordnet. In diesem Ausführungsbeispiel sind die Lagerhaken 6 derart beabstandet vom Boden angeordnet, dass die Fahrräder 16 in der Lagerposition keinen Kontakt zum Boden haben, diesen also nicht berühren. Somit ist die Drehspinne 5 vorteilhafterweise mit den in den Lagerhaken 6 positionierten Fahrrädern 16 drehbar ausgebildet. Dadurch ist es einem Nutzer möglich jedes Fahrrad 16 von ein und derselben Seite aus aus den Lagerhaken 6 der Drehspinne 5 zu entnehmen und auch in die Lagerhaken 6 einer solchen Drehspinne 5 einzuhängen.

An einem unteren Abschnitt des Mastrohres 4 sind Fixierhaken 20 zur Arretierung der Position der Fahrräder 16 angeordnet. Die Fixierhaken 20 sind in die Hinterreifen 19 der Fahrräder 16 eingreifbar ausgebildet und verhindern das Hin- und Herschwenken der Fahrräder 16. Die Fixierhaken 20 sind in horizontaler Richtung von dem Mastrohr 4 der Drehspinne 5 abstehend angeordnet. Dabei ist das vom Mastrohr 4 distal angeordnete Ende des Fixierhakens 20 derart horizontal, hakenförmig gebogen ausgebildet, dass es in den Hinterreifen 19 des in den Lagerhaken 6 der Drehspinne 5 eingehängten Fahrrads 16 eingreifbar ist und der Hinterreifen 19 aufgrund dessen an einer seitlichen Bewegung gehindert wird. Eine Bewegung des Hinterreifens 19 ist folglich nur noch in Richtung des Mastrohres 4 möglich. Durch eine Bewegung des Hinterreifens 19 in Richtung des Mastrohres kann das Fahrrad 16 aus der Fixierung durch den Fixierhaken 20 gelöst werden, wodurch eine Entnahme des Fahrrades 16 aus der Lagerposition heraus realisiert werden kann.

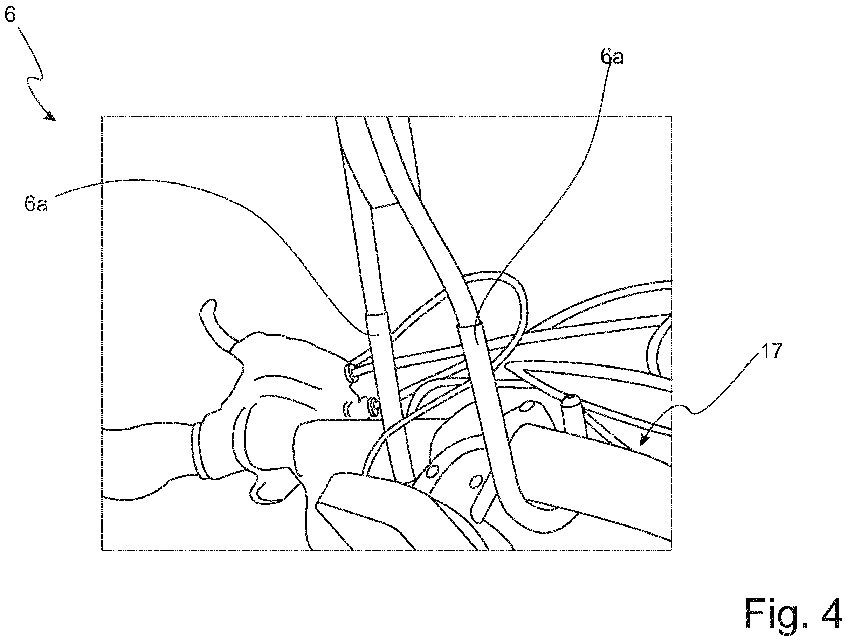

In Fig. 4 ist eine mögliche Ausführung eines Lagerhakens 6 dargestellt, welcher in einen Fahrradlenker 17 eingehängt ist. Der Lagerhaken 6 weist zwei einzelne Hakenelemente 6a auf und ist bevorzugt in etwa symmetrisch am Fahrradlenker 17 anordenbar ausgebildet. Durch die symmetrische Anordnung am Fahrradlenker 17 ist eine gleichmäßige Belastung der beiden Hakenelemente 6a des Lagerhakens 6 realisierbar.

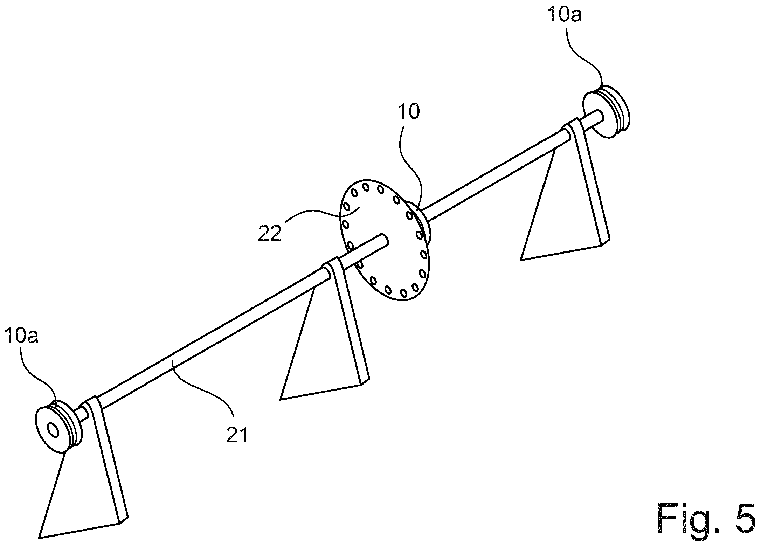

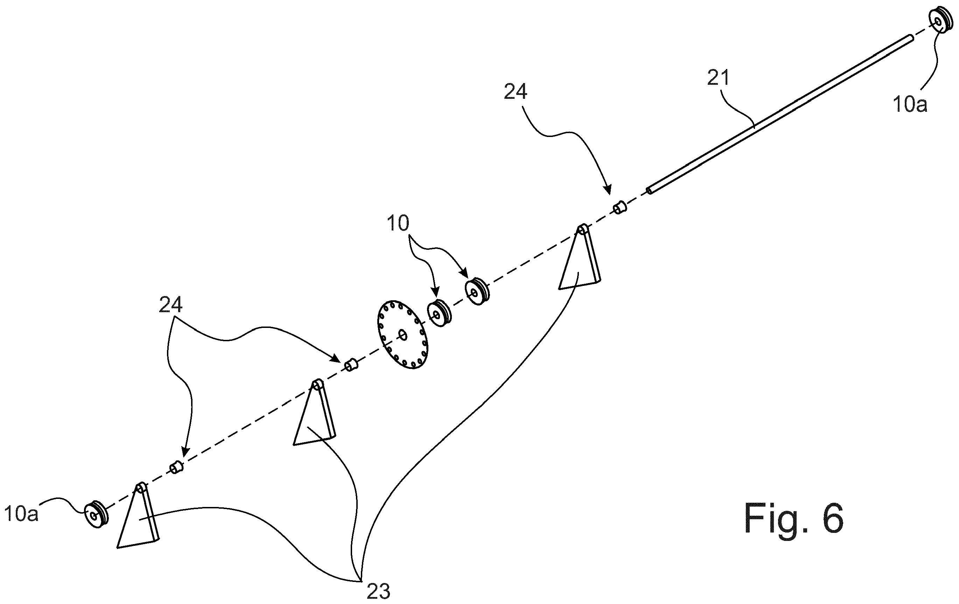

Eine mögliche Ausgestaltung der Lastwelle 21 mit zwei Umlenkrollen 10 in der Mitte der Lastwelle 21 sowie zwei Hilfsgewichtsumlenkrollen 10a an den beiden äußeren Enden der Lastwelle 21 ist in Fig. 5 in einer perspektivischen Ansicht dargestellt. Eine Explosionszeichnung einer derartigen Lastwelle 21 ist in Fig. 6 dargestellt. Dabei läuft das hier nicht dargestellte Seil 9 über die beiden in der Mitte der Lastwelle 21 angeordneten Umlenkrollen 10. Dieses Seil 10 wird derart über die beiden Umlenkrollen 10 geführt, dass die beiden Enden des Seiles 9 einander entgegenwirken. An einer Seite des Seiles 9 ist der Hebehaken 8 angeordnet und an dem anderen Ende des Seiles 9 das Hilfsgewicht 11. Neben den beiden Umlenkrollen 10 ist ferner eine Bremsscheibe 22 auf der Lastwelle 21 angeordnet, mit welcher die Position und Ausrichtung der Lastwelle 21 sowie die Höhe des Seiles 9 fixiert werden kann.

Über die beiden Hilfsgewichtsumlenkrollen 10a können Hilfsseile geführt und mit der Lastwelle 21 kraftübertragend gekoppelt werden. Mit den Hilfsseilen sind Gegenhilfsgewichte verbindbar und die Gegenhilfsgewichte wirken dem Gewicht des Hilfsgewichtes entgegen und sorgen somit dafür, dass eine geringere Kraft zur Handhabung des Hilfsgewichtes erforderlich ist. Dabei wirken die Gegenhilfsgewichte als Hebehilfe für das Hilfsgewicht. Auf der Lastwelle 21 sind ferner Lagerelemente 23 sowie Gleitlager 24 angeordnet.

### Bezugszeichenliste

- 1: Fahrradgarage
- 2: Garagenwand
- 3: Dach
- 4: Mastrohr
- 4a: Maststab
- 5: Drehspinne
- 6: Lagerhaken, Aufnahmevorrichtung
- 6a: Hakenelement
- 7: Verbindungselement
- 8: Hebehaken
- 9: Seil
- 10: Umlenkrolle
- 10a: Hilfsgewichtsumlenkrolle
- 11: Hilfsgewicht
- 12: Arretiervorrichtung, bremsbare Rolle
- 13: Steg
- 14: Schlaufe
- 15: Halterungen
- 16: Fahrrad
- 17: Fahrradlenker, Lenkerstange
- 18: Vorderreifen
- 19: Hinterreifen
- 20: Fixierhaken
- 21: Lastwelle, Welle
- 22: Bremsscheibe
- 23: Lagerelement
- 24: Gleitlager

## Patentansprüche

1. Fahrradgarage (1) zur Aufnahme von Fahrrädern (16), aufweisend eine Umhausung, eine gegenüber dem Boden erhöht angeordnete Aufnahmevorrichtung (6) zur Aufnahme von Fahrrädern (16) in vertikaler Position sowie eine Hebehilfe zur Unterstützung der vertikalen Positionierung des Fahrrades (16) in der Aufnahmevorrichtung (6), wobei die Hebehilfe eine Umlenkrolle (10) und ein über die Umlenkrolle (10) geführtes Seil (9) aufweist, an dessen erstem Ende ein Hebehaken (8) zur temporären Aufnahme des Fahrrades (16) und an dessen zweitem Ende ein dem Gewicht des Fahrrades (16) entgegenwirkendes Hilfsgewicht (11) angeordnet ist und wobei der Hebehaken (8) mittels der Hebehilfe aus einer unteren Aufnahmestellung für das Fahrrad (16) in eine obere Übergabestellung für das Fahrrad (16) an die Aufnahmevorrichtung (6) bewegbar ausgebildet ist und wobei eine Arretiervorrichtung (12) am Seil (9) angeordnet ist, durch welche das Seil (9) derart fixierbar ist, dass der Hebehaken (8) in der oberen Übergabestellung temporär zur Übergabe des Fahrrades (16) an die Aufnahmevorrichtung (6) arretiert ist.

2. Fahrradgarage (1) nach Anspruch 1, **dadurch gekennzeichnet, dass** die Hebehilfe durch die Arretiervorrichtung (12) auch in einer Zwischenstellung, bei der der Hebehaken (8) zwischen der unteren Aufnahmestellung und der oberen Übergabestellung positioniert ist, fixierbar ist.

3. Fahrradgarage (1) nach einem der Ansprüche 1 oder 2, **dadurch gekennzeichnet, dass** die Arretiervorrichtung (12) als bremsbare Umlenkrolle (10) ausgebildet ist.

4. Fahrradgarage (1) nach einem der Ansprüche 1 bis 3, **dadurch gekennzeichnet, dass** an einem oberen Abschnitt der Hebehilfe eine Hebelvorrichtung angeordnet ist, welche die notwendige Kraft zur Anhebung des Fahrrades (16) weiter reduziert.

5. Fahrradgarage (1) nach einem der Ansprüche 1 bis 4, **dadurch gekennzeichnet, dass** die Arretiervorrichtung (12) über einen Bowdenzug mit einem Betätigungselement zur Schaltung der Arretiervorrichtung (12) verbunden ist.

6. Fahrradgarage (1) nach einem der Ansprüche 1 bis 5, **dadurch gekennzeichnet, dass** mehrere Hilfsgewichte (11) modular am Seil (9) befestigbar sind.

7. Fahrradgarage (1) nach einem der Ansprüche 1 bis 6, **dadurch gekennzeichnet, dass** am Hebehaken (8) ein Aufnahmeelement zur Aufnahme von Gegenhilfsgewichten angeordnet ist.

8. Fahrradgarage (1) nach einem der Ansprüche 1 bis 7, **dadurch gekennzeichnet, dass** der Hebehaken (8) einen Steg (13) mit zwei an den beiden distalen Enden des Steges (13) befestigten Schlaufen (14) zum Überstreifen auf die Enden eines Fahrradlenkers (17) aufweist, wobei der Steg (13) mittels an den distalen Enden des Steges (13) befestigten Halterungen (15) mit dem Seil (9) verbunden ist.

9. Fahrradgarage (1) nach einem der Ansprüche 1 bis 8, **dadurch gekennzeichnet, dass** die Aufnahmevorrichtung (6) derart gegenüber dem Boden erhöht angeordnet ist, dass ein darin mit dem Fahrradlenker (17) eingehängtes Fahrrad (16) den Boden nicht berührt.

10. Fahrradgarage (1) nach einem der Ansprüche 1 bis 9, **dadurch gekennzeichnet, dass** mehrere Aufnahmevorrichtungen (6) als Lagerhaken (6) einer Drehspinne (5) kreisförmig um ein vertikal ausgerichtetes Mastrohr (4) der Drehspinne (5) herum angeordnet sind.
